# EUROPÄISCHE PATENTSCHRIFT

(11) **EP 1 082 558 B1**
(45) Veröffentlichungstag und Bekanntmachung des Hinweises auf die Patenterteilung: **13.08.2003**
(21) Anmeldenummer: 00922436.1
(22) Anmeldetag: 21.03.2000
(51) Int. Cl.: F16H 61/22

(54) **SCHALTVORRICHTUNG FÜR KRAFTFAHRZEUGGETRIEBE**
SHIFTING DEVICE FOR THE GEARBOX OF A MOTOR VEHICLE
DISPOSITIF DE COMMANDE DESTINE A DES BOITES DE VITESSES DE VEHICULES

(30) Priorität: 23.03.1999 DE 19913005
(43) Veröffentlichungstag der Anmeldung: 14.03.2001
(73) Patentinhaber: ZF Lemförder Metallwaren AG, 49441 Lemförde (DE); AUDI AG, 85045 Ingolstadt (DE)
(72) Erfinder: GIEFER, Andreas, D-49448 Lemförde (DE); NEUGEBAUER, Roland, D-93326 Abensberg (DE); SCHIBERNA, Peter, D-85051 Ingolstadt (DE)
(86) Internationale Anmeldenummer: DE0000845
(87) Internationale Veröffentlichungsnummer: WO00057088

(56) Entgegenhaltungen:
- EP-A- 0 519 208
- EP-A- 0 785 380
- DE-A- 4 217 773
- DE-A- 19 514 554
- US-A- 3 525 272
- US-A- 4 572 340
- US-A- 4 966 262
- PATENT ABSTRACTS OF JAPAN vol. 013, no. 425 (M-873), 21. September 1989 (1989-09-21) -& JP 01 160732 A (NISSAN SHATAI CO LTD), 23. Juni 1989 (1989-06-23)

## Beschreibung

Die Erfindung betrifft eine Schaltvorrichtung, wie sie insbesondere für automatische und automatisierte Kraftfahrzeuggetriebe zum Einsatz kommen kann, mit den Merkmalen der Oberbegriffe der Ansprüche 1 und 2. Derartige Schaltvorrichtungen sind aus dem Stand der Technik hinlänglich bekannt.

Schaltvorrichtungen, die Sperrglieder in unterschiedlichen Ausgestaltungen aufweisen, sind in vielfachen Ausfertigungen bekannt. Infolge ständig steigender Sicherheitsanforderungen und unterschiedlicher nationaler Gesetzgebungen ist es erforderlich, an gatttungsgemäßen Schaltvorrichtungen Vorkehrungen zu treffen, die beispielsweise die unerwünschte oder unberechtigte Anwahl einer Fahrstufe bzw. das Starten des Motors bei eingelegter Fahrstufe verhindern. Zur Erhöhung der Sicherheit gegen Fehlbedienungen werden zwei Systeme in Kombination mit Schaltvorrichtungen eingesetzt. Bekannt sind diese Systeme unter "Keylock" und "Shiftlock".

Beim System "Keylock" kann der Zündschlüssel nur eingesteckt und der Motor nur gestartet werden, wenn sich der Wählhebel in der Parkstellung "P" befindet. Beim Abstellen des Fahrzeuges kann der Zündschlüssel nur in der Parkstellung abgezogen werden. So ist das Einlegen der Parksperre zwingend und ein ungewolltes Abziehen des Zündschlüssels während der Fahrt kann wirksam verhindert werden.

Das System "Shiftlock" zwingt den Fahrer zur richtigen Positionierung seiner Füße auf der Pealerie. Nur wenn die Bremse betätigt wird, erlaubt das System "Shiftlock" die Anwahl einer Fahrstufe aus der Parkstellung oder wahlweise der Neutralstellung heraus.
Es ist auch bekannt, beide Systeme miteinander zu kombinieren.

Bei Fahrzeugen mit Automatikgetrieben wird der Wählhebel nach dem Anlassen des Motors aus einer neutralen Fahrstellung heraus (P- oder N-Stellung) in eine Fahrstellung (zum Beispiel "D") bewegt, um das Fahrzeug anfahren zu können.

Es kann zu einem unbeabsichtigten Anfahren des Fahrzeuges kommen, wenn der Wählhebel beispielsweise bei laufendem Motor aus der Neutralstellung versehentlich in eine Fahrstellung bewegt wird. Um derartige Fehlbedienungen zu verhindern bzw. zu vermeiden, dass aus einer Fahrstufe mit hoher Getriebedrehzahl versehentlich in eine Fahrstufe mit niederer Drehzahl geschaltet wird, ist aus der DE 41 18 519 A1 eine Schaltvorrichtung für automatische Kraftfahrzeuggetriebe bekannt, die ein Klinkengesperre aufweist. An dem Wählhebel ist dabei ein Sperrelement angebracht. Das Sperrelement wirkt mit einer Klinke zusammen. Die Klinke ist ihrerseits um eine Achse schwenkbar gelagert. Das Sperrelement greift in den Sperrstellungen in eine and der Klinke ausgeformte Kontur ein. Die Klinke ist über eine Schenkelfeder permanent mit dem Sperrelement im Eingriff.

Zur Aufhebung der Sperrwirkung auf den Wählhebel wird ein Elektromagnet, dessen Anker bei Bestromung ausgefahren wird, betätigt, wodurch eine einfache "Stromlossperre" realisiert wurde. Die Ansteuerung des Elektromagneten erfolgt über eine zentrale elektronische Verarbeitungseinheit (CPU) des Kraftfahrzeuges. Diese Steuereinheit erfaßt Signale von einem Drehzahlsensor, einem Bremspedalsensor, einem Wählhebelstellungssensor und von der Zündung des Motors.

Mit einer derartigen Schaltvorrichtung sind demnach die Systeme Shiftlock und Keylock realisierbar. Ferner kann wirksam eine Fehlbedienung des Wählhebels aus verschiedenen Schaltstellungen heraus verhindert werden.

Bei der in DE 41 18 519 A1 beschriebenen Lösung wird die Schaltbewegung des Wählhebels lediglich in einer Bewegungsrichtung desselben gesperrt. Die entgegengesetzte Schaltbewegung (heraufschalten der Getriebegänge) ist jederzeit möglich. Ferner kann mit dieser bekannten Ausführung ein Mißbrauch der Schaltung, also das gewaltsame Herauf- oder Herunterschalten nicht verhindert werden, weil die Klinke lediglich über eine Schenkelfeder gegen das Sperrelement gedrückt wird.

Aus der US 4,572,340 geht eine mechanische Getriebeschalteinrichtung hervor, deren Schaltstangen die vom Fahrer mittels verschiedener Fußpedale eingeleiteten Schaltbefehle getriebeseitig einen Schaltvorgang bewirken. Darin kommt eine Betätigungseinrichtung in Form eines Hydraulikzylinders zum Einsatz, der eine Verschwenkung eines Sperrgliedes um die Achse bewirkt. Zusätzlich ist ein Rückstellelement erforderlich, das permanent eine Gegenkraft zu der Betätigungseinrichtung erzeugt und für eine Rückstellung des Sperrgliedes sorgt, sodass der Wählhebel stets gesperrt wird, sobald die Betätigungseinrichtung ausser Kraft ist. Die Systeme "Shiftlock" oder "Keylock" sind mit einer derartigen Schaltvorrichtung nicht realisierbar.

Die US 4,966,262 beschreibt eine Schaltvorrichtung für automatische Kraftfahrzeuggetriebe mit einem um eine Achse schwenkbaren Wählhebel zur Anwahl der vom Kraftfahrzeuggetriebe definierten Fahrstufen, einer Betätigungseinrichtung und einem um eine Achse schwenkbaren Sperrglied, wobei ferner ein Signalgeber an der Bremse des Kraftfahrzeuges und ein Signalgeber am Zündschloss des Kraftfahrzeuges vorhanden sind, deren Signale von einer zentralen Steuereinheit verarbeitet werden.

Der Erfindung liegt die technische Problemstellung zugrunde, eine Schaltvorrichtung für automatische Kraftfahrzeuggetriebe zu schaffen, die einen einfachen Aufbau aufweist und eine Sperrung des Wählhebels in jeder Schaltstellung ermöglicht. Dabei sollten aus Sicherheitsgründen auch die Systeme "Keylock" und "Shiftlock" realisiert werden.

Die Erfindung löst diese technische Problemstellung mit den kennzeichnenden Merkmalen der Patentansprüche 1 und 2.
Weitere Ausgestaltungen der Erfindung sind Gegenstand der Unteransprüche.

Erfindungsgemäß weist eine Schaltvorrichtung für automatische Kraftfahrzeuggetriebe demnach einen um mindestens eine Achse schwenkbaren Wählhebel auf, mittels dessen die von dem Kraftfahrzeuggetriebe definierten Fahrstufen (P, R, N, D,...) anwählbar sind, wobei jeder Fahrstufe eine Schaltstellung des Wählhebels zugeordnet ist.

Darüber hinaus ist an der Schaltvorrichtung eine Betätigungseinrichtung vorhanden, die gemäß einer ersten Lösung der Aufgabenstellung mit einem um eine Achse schwenkbaren Sperrglied zusamenwirkt. Das Sperrglied weist dabei auf der dem Wählhebel zugewandten Seite eine der jeweiligen Schaltstellung des Wählhebels entsprechende Eingriffskontur auf. Die Eingriffskontur ist erfindungsgemäß so gestaltet, dass sie den Wählhebel in jeder Schaltstellung formschlüssig aufnimmt und somit wirksam sperrt.

Entsprechend einer weiteren Lösung der technischen Problemstellung kann ebenso eine Betätigungseinrichtung vorgesehen werden, die mit einem in einer Ebene bewegbaren Sperrglied zusammenwirkt. Das somit in einer Ebene schwenkbare oder verschiebbare Sperrglied weist auf der dem Wählhebel zugewandten Seite ebenfalls eine der jeweiligen Schaltstellung des Wählhebels entsprechende Eingriffskontur auf, sodass der Wählhebel in jeder Schaltstellung sperrbar ist.

Gemein ist beiden vorgestellten Lösungen, dass die Schaltstellung des Wählhebels von wenigstens einem Signalgeber erfaßt wird. Ferner weist die Bremse des Kraftfahrzeuges und/oder das Zündschloß jeweils wenigstens einen Signalgeber auf, wobei sämtliche Signale zusammen mit wenigstens einem Fahrzustandsignal des Kraftfahrzeuggetriebes einer zentralen Steuereinheit (CPU) zugeführt werden, die in Auswertung vordefinierter Parameter den Elektromagneten aktiviert oder deaktiviert. Diese signalabhängige Steuerung ermöglicht in Kombination mit einer erfindungsgemäßen Schaltvorrichtung für ein automatisches Kraftfahrzeuggetriebe eine einfache und kostengünstige Realisierung des Keylock- und Shiftlock-Systems sowie der Verhinderung von Fehlbedienungen der Schaltvorrichtung.

Eine erfindungsgemäße Schaltvorrichtung ist in ihrem Aufbau extrem einfach und damit kostengünstig herstellbar. Es ist lediglich ein Sperrglied und eine mit diesem zusammenwirkende Betätigungseinrichtung erforderlich, um den Wählhebel sicher und zuverlässig in jeder beliebigen Stellung zu sperren.
Die Systeme "Shiftlock" und "Keylock" sind dabei in einfacher Weise umsetzbar.

Eine weitere Ausgestaltung der Erfindung sieht vor, dass die mechanische, elektrische, elektromagnetische, hydraulische oder pneumatische Betätigungseinrichtung das Sperrglied im Sperrzustand gegen den Wählhebel drückt oder an den Wählhebel heranzieht, sodass der der Schaltstellung zugeordnete Abschnitt der Eingriffskontur den Wählhebel unbewegbar festsetzt.

In vorteilhafter Weise kann die Betätigungseinrichtung ein Elektromagnet sein. Wird als Betätigungseinrichtung ein Elektromagnet verwendet, so ist vorzugsweise eine Bauart einzusetzen, die im unbestromten Zustand einen eingezogenen Anker aufweist. Durch diesen eingezogenen Anker wird das Sperrglied gegen den Wählhebel gedrückt oder an den Wählhebel herangezogen, wodurch in einfacher Weise eine "Stromlossperre" realisierbar ist. Wird der Elektromagnet bestromt, so muß der Anker gegen die Kraft einer Feder ausgefahren werden, die den Anker im unbestromten Zustand in seine Ausgangsstellung zurückführt. Derartige Elektromagneten sind bekannt und es ist dementsprechend möglich, ein Standartbauteil für eine erfindungsgemäße Schaltvorrichtung einzusetzen.

Die Erfindung beschreibt ferner ein Sperrglied zur Sperrung des Wählhebels, das dadurch gekennzeichnet ist, dass es eine räumliche Negativform zu dem unteren Ende des Wählhebels aufweist.

Selbstverständlich können die vorstehend genannten und die nachfolgend noch zu erläuternden Merkmale der Erfindung nicht nur in der jeweils angegebenen Kombination, sondern auch in anderen Kombinationen oder in Alleinstellung verwendet werden, ohne dabei den Rahmen der Erfindung zu verlassen.

Weitere vorteilhafte Ausgestaltungen der Erfindung werden nachfolgend unter Bezugnahme auf die zugehörigen Zeichnungen näher erläutert.

Es zeigen:
- Figur 1:: die vereinfachte, ausschnittsweise Darstellung einer erfindungsgemäßen Schaltvorrichtung für automatische Kraftfahrzeuggetriebe im Schnitt,
- Figur 1a:: einen vergrößerten Ausschnitt der Eingriffskontur des Sperrgliedes,
- Figur 2:: eine dreidimensionale Darstellung einer erfindungsgemäßen Schaltvorrichtung in einer Ansicht entsprechend der Richtung des Pfeiles A in Figur 1,
- Figur 3:: das Prinzipschaltbild einer elektronischen Steuerung für eine erfindungsgemäße Schaltvorrichtung für automatische Kraftfahrzeuggetriebe
und
- Figur 4:: eine Ansicht der Schaltvorrichtung gemäß Pfeil C in Figur 1.

In den Figuren ist eine bevorzugte Ausführungsform einer erfindungsgemäßen Schaltvorrichtung für automatische Kraftfahrzeuggetriebe dargestellt. Bei einer derartigen Schaltvorrichtung ist ein Wählhebel 2 um eine Achse 1 schwenkbar in einem Gehäuse 6 gelagert. Darüber hinaus ist bei der gezeigten Schaltvorrichtung der Wählhebel 2 um eine zu der Achse 1 orthogonal verlaufende, zweite Achse schwenkbar. Eine Bewegung des Wählhebels 2 um die Achse 1 ermöglicht die Anwahl der einzelnen Fahrstufen innerhalb einer Automatikgasse.

Wird der Wählhebel um die zweite, zu der Achse 1 orthogonal verlaufenden Achse verschwenkt, so ist ein Gassenwechsel, beispielsweise zu einer Schrittschaltgasse möglich. Innerhalb dieser Schrittschaltgasse kann über den Wählhebel in an sich bekannter Weise durch tippweises Bewegen ein Herauf- oder Herunterschalten um jeweils einen Getriebegang bewirkt werden. Der Wählhebel ist hier aus einer Schaltstellung heraus (beispielsweise Schaltstellung "D") in die Schrittschaltgasse schwenkbar. Er wird dabei innerhalb einer Schaltkulisse 15 bewegt. Unterhalb der Achse 1 weist der Schalthebel eine axiale Verlängerung auf.

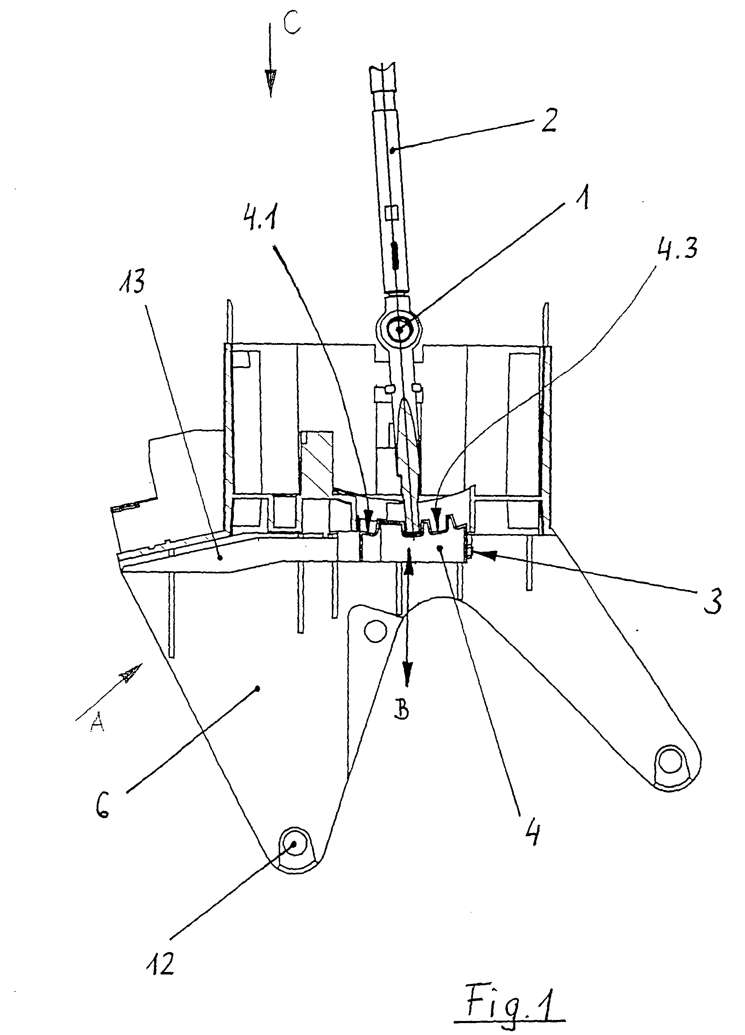

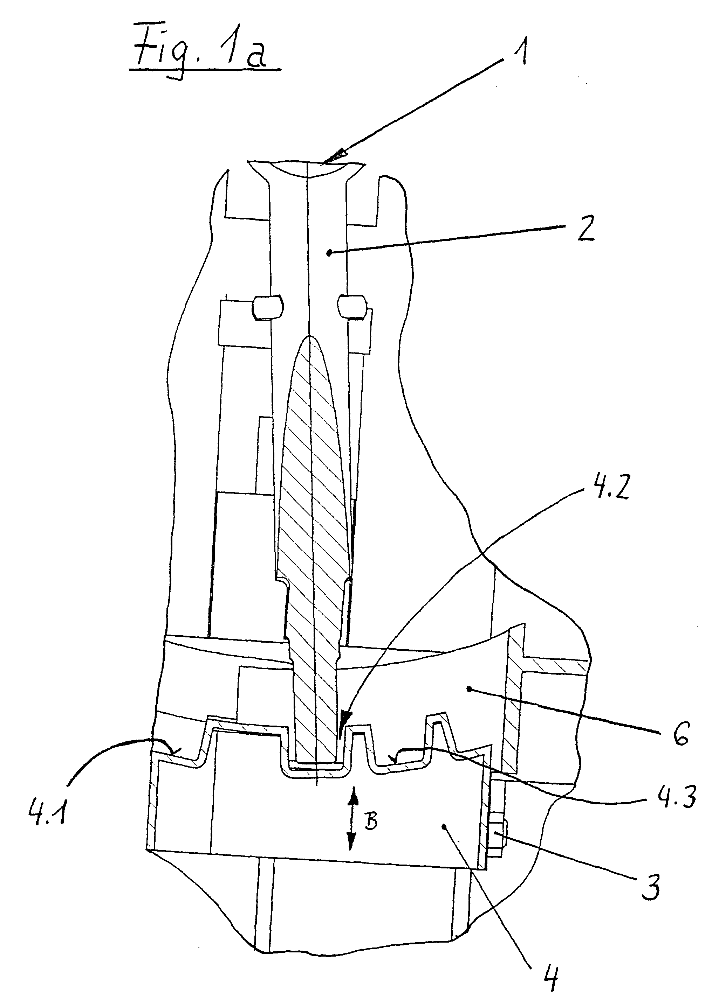

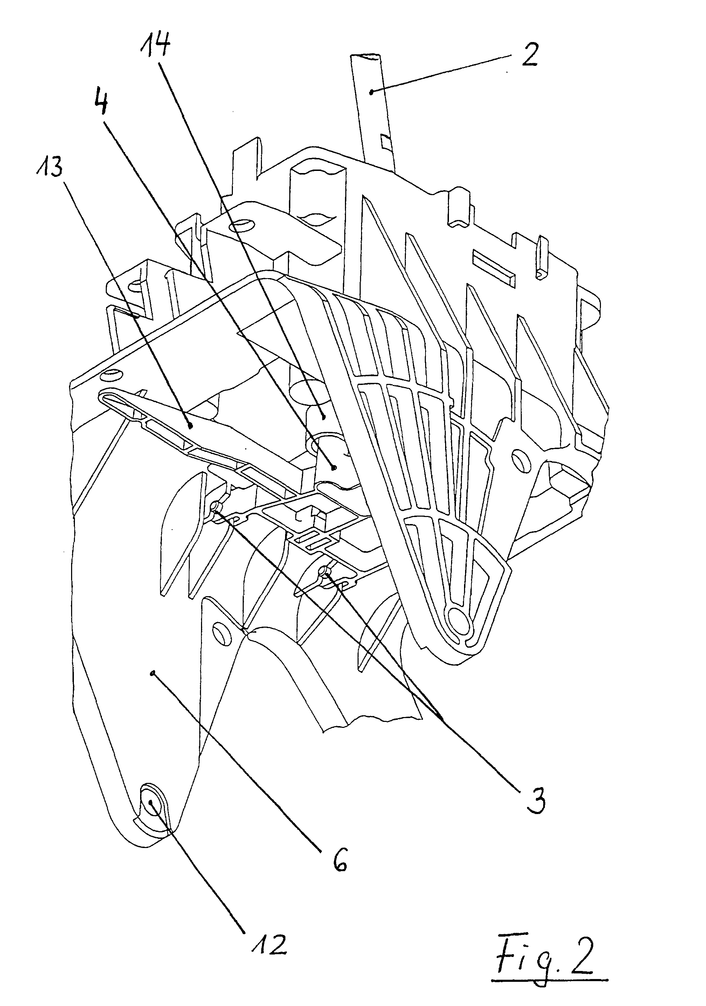

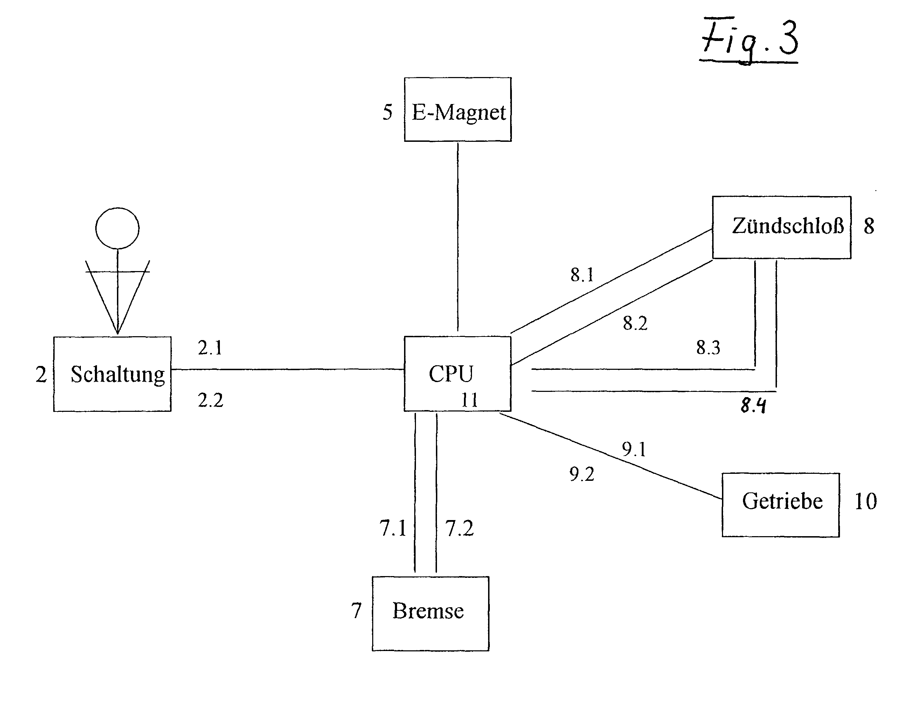

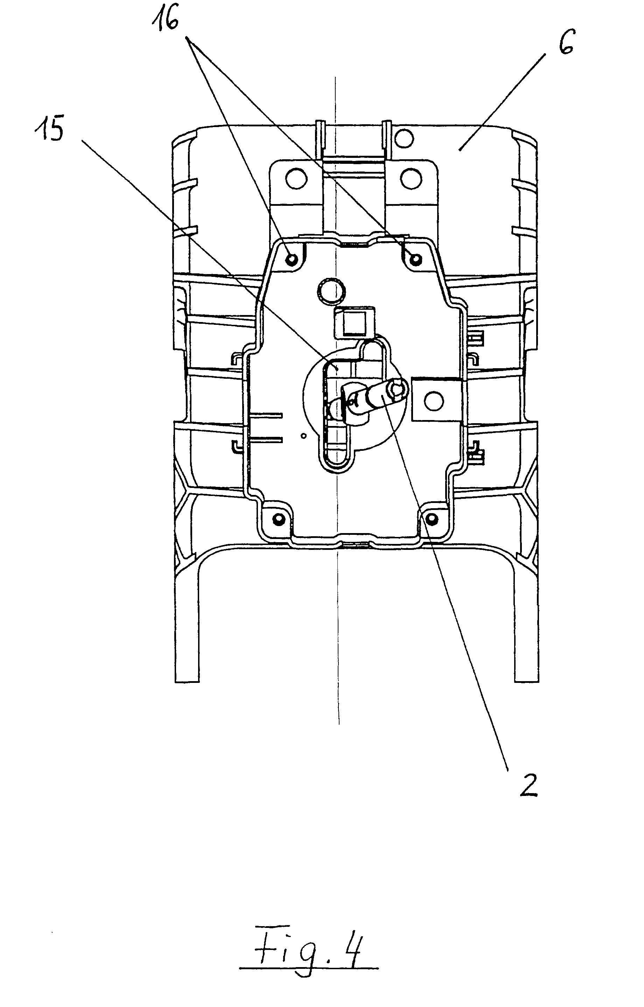

Ein Sperrglied 4 ist um eine Achse 3 verschwenkbar. Wie aus der Darstellung in Figur 2 ersichtlich ist, hat das Sperrglied 4 eine annähernd U-förmige Gestalt. Es weist eine Eingriffskontur 4.1., 4.2, 4.3 auf, welche durch eine Betätigungseinrichtung, die vorliegend ein Elektromagnet 5 ist, mit dem unteren Ende des Wählhebels in Eingriff gebracht werden kann. Die Achse 3 wird baulich durch je einen Bolzen ausgeführt, der jeweils einen der Schenkel des U-förmigen Sperrgliedes 4 durchsetzt.

Wie insbesondere aus den Figuren 1 und 1a erkennbar wird, weist das Sperrglied 4 eine zu jeder Schaltstellung des Wählhebels 2 komplementäre Eingriffskontur zu der von der axialen Verlängerung des Wählhebels und der von dieser beschrittenen Bahn auf Es bildet somit eine räumliche Negativform zu dem unteren Ende des Wählhebels 2, was bedeutet, dass der Wählhebel in jeder Schaltstellung sperrbar ist. Die Kombination mit einer Signalsteuerung ist dabei sinnvoll.

Auf diese Weise wird mit einer erfindungsgemäßen Schaltvorrichtung jede Fehlschaltung wirksam verhindert.
Der an dem Sperrglied 4 einteilig angeformte Notentriegelungshebel 13 ist für die Erfindung eher unwesentlich. Er stellt lediglich eine zusätzliche Sicherheitsmaßnahme dar, die ein Entriegeln des Wählhebels bei Ausfall sämtlicher Systeme möglich macht, so daß das Fahrzeug zumindest noch in die Werkstatt gefahren werden kann.

An dem Gehäuse 6 sind ferner Gehäusebefestigungen 12 angebracht, die die Festlegung der Schaltvorrichtung in dem Kraftfahrzeug ermöglichen. Aus der Figur 2 ist ferner ersichtlich, wie das Sperrglied 4 in den Wählhebelschacht 14 eingreift. Zur Abdeckung der gesamten Schaltvorrichtung wird eine hier nicht gezeigte Schaltabdeckung eingesetzt. Die Befestigungsöffnungen zur Montage dieser Schaltabdeckung sind in der Figur 4 mit 16 bezeichnet. Die Betätigungseinrichtung bzw. der Elektromagnet 5 ist in den Figuren der besseren Übersichtlichkeit halber nicht dargestellt. Der im bestromten Zustand ausgefahrene Anker des Elektromagneten setzt im Bereich zwischen der Achse 3 und der Eingriffskontur 4.1, 4.2, 4.3 des Sperrgliedes 4 an.

Eine erfindungsgemäße Schaltvorrichtung für automatische Kraftfahrzeuggetriebe funktioniert überwiegend ohne mechanische Elemente auf rein elektronischem Wege. Die Schaltstellungen des Schalthebels werden durch ein von einem Signalgeber erzeugtes Schaltstellungssignal erfaßt. Die Bremse 7 des Kraftfahrzeuges weist einen Signalgeber auf, der die folgenden Signale an eine zentrale Steuereinheit 11 weitergibt:
Erstens: Bremse getreten (7.1),
zweitens: Bremse nicht getreten (7.2).
Das Zündschloß 8 des Kraftfahrzeuges enthält ferner einen Signalaufnehmer, der die Signale: Zündschloß sperren 8.1 und
Zündschloß freigeben 8.2 von der zentralen Steuereinheit 11 erfaßt. Darüber hinaus weist das Zündschloß 8 einen Signalgeber auf, der die Signale:
   Zündschloß ist gesperrt 8.3 und
   Zündschloß ist freigegeben 8.4 an die zentrale Steuereinheit 11 weitergibt. Sämtliche
   Signale werden zusammen mit einem Fahrzustandssignal 9.1 oder 9.2 des Kraftfahrzeuggetriebes 10 in der zentralen Steuereinheit 11 ausgewertet, wobei diese unter Berücksichtigung vordefinierter Parameter den Elektromagneten 5 aktiviert oder deaktiviert.

Als Fahrzustandssignal kann beispielsweise die Drehzahl am Getriebe erfaßt werden. Somit ist es möglich, einen Wechsel der Fahrstufe nur bei vorbestimmten Geschwindigkeiten des Kraftfahrzeuges zuzulassen, wobei der Elektromagnet mit dem Sperrglied 4 zusammenwirkt und den Wählhebel 2 durch Verschwenken des Sperrgliedes 4 um die Achse 3 freigibt.

Im Gegensatz dazu wird der Wählhebel bei nicht erfüllten Parametern, beispielsweise ab oder bis zu einer bestimmten Geschwindigkeit gesperrt, sodaß der Wechsel der Fahrstufe in diesem Fall nicht möglich ist.

Zusammenfassend wurde mit der erfindungsgemäßen Schaltvorrichtung für automatische Kraftfahrzeuggetriebe eine einfache Sperrmöglichkeit des Wählhebels in jeder Fahrstufe des Wählhebels geschaffen. Das Gesamtsystem wird von eine zentralen Steuereinheit beeinflußt. Über die zentrale Steuereinheit sind somit die Funktionen "Keylock" und "Shiftlock" realisierbar und darüber hinaus jegliche Fehlschaltungen des Wählhebels vermeidbar, so daß sowohl Fehler bei der Bedienung als auch Mißbräuche am Kraftfahrzeug (Diebstahlsicherung) vermieden werden können.

### Bezugszeichenliste:

- 1: Achse
- 2: Wählhebel
- 2.1, 2.2: Schaltstellungssignal
- 3: Achse
- 4: Sperrglied
- 4.1, 4.2, 4.3: Eingriffskontur
- 5: Betätigungseinrichtung
- 6: Gehäuse
- 7: Bremse
- 7.1, 7.2: Bremssignal
- 8: Zündschloß
- 8.1, 8.2, 8.3, 8.4: Zündschloßsignal
- 9.1, 9.2: Fahrzustandssignal
- 10: Kraftfahrzeuggetriebe
- 11: zentrale Steuereinheit (CPU)
- 12: Gehäusebefestigung
- 13: Notentriegelungshebel
- 14: Wählhebelschacht
- 15: Schaltkulisse
- 16: Befestigungsöffnungen für Schaltabdeckung

## Patentansprüche

1. Schaltvorrichtung für automatische Kraftfahrzeuggetriebe mit:
- einem um mindestens eine Achse (1) schwenkbaren Wählhebel (2), mittels dessen die von dem Kraftfahrzeuggetriebe definierten Fahrstufen anwählbar sind,
- einer Betätigungseinrichtung (5),
- einem um eine Achse (3) schwenkbaren Sperrglied (4),
- wenigstens einem Signalgeber zur Erzeugung mindestens eines Signales zur Erfassung der Schaltstellung des Wählhebels (2),
- mindestens einem Signalgeber, den die Bremse (7) des Kraftfahrzeuges aufweist und / oder einem Signalgeber des Zündschlosses (8) des Kraftfahrzeuges,
- einer zentralen Steuereinheit (11),
**dadurch gekennzeichnet, dass**
sämtliche Signale zusammen mit wenigstens einem Fahrzustandssignal des Kraftfahrzeuggetriebes (10) der Steuereinheit zugeführt werden, die in Auswertung vordefinierter Parameter die Betätigungseinrichtung (5) steuert, wobei das durch die Betätigungseinrichtung (5) um die Achse (3) verschwenkbare Sperrglied (4) auf der dem Wählhebel (1) zugewandten Seite eine jeder Schaltstellung des Wählhebels entsprechende Eingriffskontur (4.1, 4.2, 4.3) aufweist und der Wählhebel (1) somit in jeder Schaltstellung sperrbar ist.

2. Schaltvorrichtung für automatische Kraftfahrzeuggetriebe mit:
- einem um mindestens eine Achse (1) schwenkbaren Wählhebel (2), mittels dessen die von dem Kraftfahrzeuggetriebe definierten Fahrstufen anwählbar sind,
- einer Betätigungseinrichtung (5),
- einem in einer Ebene bewegbaren Sperrglied (4),
- wenigstens einem Signalgeber zur Erzeugung mindestens eines Signales zur Erfassung der Schaltstellung des Wählhebels (2),
- mindestens einem Signalgeber, den die Bremse (7) des Kraftfahrzeuges aufweist und / oder einem Signalgeber des Zündschlosses (8) des Kraftfahrzeuges,
- einer zentralen Steuereinheit (11),
**dadurch gekennzeichnet, dass**
sämtliche Signale zusammen mit wenigstens einem Fahrzustandssignal des Kraftfahrzeuggetriebes (10) der Steuereinheit zugeführt werden, die in Auswertung vordefinierter Parameter die Betätigungseinrichtung (5) steuert, wobei das durch die Betätigungseinrichtung (5) bewegbare Sperrglied (4) auf der dem Wählhebel (1) zugewandten Seite eine jeder Schaltstellung des Wählhebels entsprechende Eingriffskontur (4.1, 4.2, 4.3) aufweist und der Wählhebel (1) somit in jeder Schaltstellung sperrbar ist.

3. Schaltvorrichtung für automatische Kraftfahrzeuggetriebe nach einem der Ansprüche 1 oder 2,
**dadurch gekennzeichnet, dass**
die mechanische, elektrische, elektromagnetische, hydraulische oder pneumatische Betätigungseinrichtung (5) das Sperrglied (4) im Sperrzustand gegen den Wählhebel (2) drückt, oder an den Wählhebel (2) heranzieht, sodass der der Schaltstellung zugeordnete Abschnitt der Eingriffskontur (4.1, 4.2, 4.3) sich mit dem Wählhebel in Eingriff befindet.

4. Schaltvorrichtung für automatische Kraftfahrzeuggetriebe nach einem der vorstehend genannten Ansprüche,
**dadurch gekennzeichnet, dass**
die Betätigungseinrichtung (5) ein Elektromagnet ist.

5. Schaltvorrichtung für automatische Kraftfahrzeuggetriebe nach Anspruch 4,
**dadurch gekennzeichnet, dass**
der im unbestromten Zustand eingezogene Anker des Elektromagneten (5) das Sperrglied (4) gegen den Wählhebel (2) zieht und diesen damit sperrt.

6. Schaltvorrichtung für automatische Kraftfahrzeuggetriebe nach Anspruch 4,
**dadurch gekennzeichnet, dass**
der im unbestromten Zustand ausgefahrene Anker des Elektromagneten (5) das Sperrglied (4) gegen den Wählhebel (2) drückt und diesen damit sperrt.

7. Schaltvorrichtung für automatische Kraftfahrzeuggetriebe nach einem der Ansprüche 1 bis 6,
**dadurch gekennzeichnet, dass**
- die Bremse (7) des Kraftfahrzeuges zwei Signalgeber aufweist, die die folgenden Signale an die zentrale Steuereinheit (11) weitergeben:
1. Bremse getreten (7.1)
2. Bremse nicht getreten (7.2)
- das Zündschloß (8) des Kraftfahrzeuges zwei Signalaufnehmer aufweist, die die folgenden Signale der zentralen Steuereinheit (11) erfassen:
1. Zündschloss sperren (8.1)
2. Zündschloss freigeben (8.2)
- das Zündschloß (8) des Kraftfahrzeuges zwei Signalgeber aufweist, die die folgenden Signale an die zentrale Steuereinheit (11) weitergeben:
1. Zündschloss ist gesperrt (8.3)
2. Zündschloss ist freigegeben (8.4)
und sämtliche Signale zusammen mit dem wenigstens einen Fahrzustandssignal (9.1, 9.2) des Kraftfahrzeuggetriebes (10) in der zentralen Steuereinheit (11) ausgewertet werden, die unter Berücksichtigung der vordefinierten Parameter die Betätigungseinrichtung (5) steuert.

8. Schaltvorrichtung für automatische Kraftfahrzeuggetriebe nach einem der vorstehend genannten Ansprüche,
**dadurch gekennzeichnet, dass**
die Signale digitale oder analoge Signale sind.

9. Schaltvorrichtung für automatische Kraftfahrzeuggetriebe nach einem der vorstehend genannten Ansprüche,
**dadurch gekennzeichnet, dass**
das Sperrglied (4) eine räumliche Negativform zu dem unteren Ende des Wählhebels aufweist.

## Claims

1. Selection device for automatic motor-vehicle transmissions, comprising:
- a selection lever (2) that can be swivelled around at least one axis (1) and by means of which the switching steps defined by the motor vehicle transmission can be selected,
- an actuating device (5),
- a locking member (4) that can be swivelled around an axis (3),
- at least one signal generator for generating at least one signal to detect the selection position of the selection lever (2),
- at least one signal generator that the brake (7) of the motor vehicle possesses and/or a signal generator of the ignition lock (8) of the motor vehicle,
- a central control unit (11),
**characterized in that** all the signals together with at least one driving-mode signal of the motor-vehicle transmission (10) are fed to the control unit, which controls the actuating device (5) in evaluating predefined parameters, wherein the locking member (4) that can be swivelled around the axis (3) by the actuating device (5) on the side facing the selection lever (2) has an engagement contour (4.1, 4.2, 4.3) corresponding to every selection position of the selection lever and the selection lever (2) can consequently be locked in every selection position.

2. Selection device for automatic motor-vehicle transmissions, comprising:
- a selection lever (2) that can be swivelled around at least one axis (1) and by means of which the switching steps defined by the motor-vehicle transmission can be selected,
- an actuating device (5),
- a locking member (4) that can be moved in one plane,
- at least one signal generator for generating at least one signal to detect the selection position of the selection lever (2),
- at least one signal generator that the brake (7) of the motor vehicle possesses and/or a signal generator of the ignition lock (8) of the motor vehicle,
- a central control unit (11),
**characterized in that** all the signals together with at least one driving-mode signal of the motor-vehicle transmission (10) are fed to the control unit, which controls the actuating device in evaluating predefined parameters, wherein the locking member (4) that can be moved by the actuating device (5) has on the side facing the selection lever (2) an engagement contour (4.1, 4.2, 4.3) corresponding to every selection position of the selection lever and the selection lever (2) can consequently be locked in every selection position.

3. Selection device for automatic motor-vehicle transmissions according to either of Claims 1 or 2, **characterized in that** the mechanical, electrical, electromagnetic, hydraulic or pneumatic actuating device (5) presses the locking device (4) in the locking condition against the selection lever (2) or pulls up the selection lever (2) so that that section of the engagement contour (4.1, 4.2, 4.3) assigned to the selection position is engaged with the selection lever.

4. Selection device for automatic motor-vehicle transmissions according to any one of the preceding claims, **characterized in that** the actuating device (5) is an electromagnet.

5. Selection device for automatic motor-vehicle transmissions according to Claim 4, **characterized in that** the core, retracted in the unenergized state, of the electromagnet (5) pulls the locking member (4) against the selection lever (2) and consequently locks it.

6. Selection device for automatic motor-vehicle transmissions according to Claim 4, **characterized in that** the core extended in the unenergized state, of the electromagnet (5), presses the locking member (4) against the selection lever (2) and consequently locks it.

7. Selection device for automatic motor-vehicle transmissions according to any one of Claims 1 to 6, **characterized in that**
- the brake (7) of the motor vehicle has two signal generators that convey the following signals to the central control unit (11):
1. brake depressed (7.1)
2. brake not depressed (7.2)
- the ignition lock (8) of the motor vehicle has two signal detectors that detect the following signals from the central control unit (11):
1. lock ignition lock (8.1)
2. release ignition lock (8.2)
- the ignition lock (8) of the motor vehicle has two signal generators that convey the following signals to the central control unit (11):
1. ignition lock is locked (8.3)
2. ignition lock is released (8.4)
and all the signals, together with the at least one driving-mode signal (9.1, 9.2) of the motor-vehicle transmission (10) are evaluated in the central control unit (11), which controls the actuating device (5) taking into account the predefined parameters.

8. Selection device for automatic motor-vehicle transmissions according to any one of the abovementioned claims, **characterized in that** the signals are digital or analogue signals.

9. Selection device for automatic motor-vehicle transmissions according to any one of the abovementioned claims, **characterized in that** the locking member (4) has a spatial negative shape towards the lower end of the selection lever.

## Revendications

1. Dispositif de commutation pour des boîtes de vitesses automatiques de véhicules automobiles, comportant:
- un levier de sélection (2) pouvant basculer autour d'au moins un axe (1) et à l'aide duquel les étages de vitesse de déplacement, définis par la boîte de vitesses du véhicule automobile, peuvent être sélectionnés,
- un dispositif d'actionnement (5),
- un organe de blocage (4) pouvant pivoter autour d'un axe (3),
- au moins un générateur de signaux pour produire au moins un signal pour détecter la position de commutation du levier de sélection (2),
- au moins un générateur de signaux, que comporte le frein (7) du véhicule automobile, et/ou un générateur de signaux de la serrure de contact (8) du véhicule automobile,
- une unité centrale de commande (11),
**caractérisé en ce que**
tous les signaux sont envoyés conjointement avec au moins un signal d'état de marche de la boîte de vitesses (10) du véhicule automobile à l'unité de commande, qui commande le dispositif d'actionnement (5) lors de l'évaluation de paramètres prédéfinis, l'organe de blocage (4) pouvant pivoter sous l'action du dispositif d'actionnement (5) autour de l'axe (3) comportant, sur le côté tourné vers le levier de sélection (1), un profil d'engrènement (4.1, 4.2, 4.3) qui correspond à chaque position de commutation du levier de sélection, et le levier de sélection (1) pouvant être par conséquent bloqué dans chaque position de commutation.

2. Dispositif de commutation pour boîte de vitesses automatique pour véhicules automobiles, comportant:
- un levier de sélection (2) pouvant basculer autour d'au moins un axe (1) et à l'aide duquel les étages de vitesse de déplacement, définis par la boîte de vitesses du véhicule automobile, peuvent être sélectionnés,
- un dispositif d'actionnement (5),
- un organe de blocage (4) déplaçable dans un plan,
- au moins un générateur de signaux pour produire au moins un signal pour détecter la position de commutation du levier de sélection (2),
- au moins un générateur de signaux, que comporte le frein (7) du véhicule automobile, et/ou un générateur de signaux de la serrure de contact (8) du véhicule automobile,
- une unité centrale de commande (11),
**caractérisé en ce que**
tous les signaux sont envoyés conjointement avec au moins un signal d'état de marche de la boîte de vitesses (10) du véhicule automobile à l'unité de commande, qui commande le dispositif d'actionnement (5) lors de l'évaluation de paramètres prédéfinis, l'organe de blocage (4) pouvant pivoter sous l'action du dispositif d'actionnement (5) autour de l'axe (3) comportant, sur le côté tourné vers le levier de sélection (1), un profil d'engrènement (4.1, 4.2, 4.3) qui correspond à chaque position de commutation du levier de sélection, et le levier de sélection (1) pouvant être par conséquent bloqué dans chaque position de commutation.

3. Dispositif de commutation pour boîte de vitesses automatiques pour véhicules automobiles selon l'une des revendications 1 ou 2, **caractérisé en ce que**
le dispositif d'actionnement mécanique, électrique, électromagnétique, hydraulique ou pneumatique (5) repousse l'organe de blocage (4) à l'état bloqué contre le levier de sélection (2) ou se rapproche du levier de sélection (2) de sorte que la section, associée à la position de commutation, du profil d'engrènement (4.1, 4.2, 4.3) engrène avec le levier de sélection.

4. Dispositif de commutation pour boîte de vitesses automatiques pour véhicules automobiles selon l'une des revendications précédentes, **caractérisé en ce que** le dispositif d'actionnement (5) est un électroaimant.

5. Dispositif de commutation pour boîte de vitesses automatiques pour véhicules automobiles selon la revendication 4, **caractérisé en ce que**
l'armature, qui est rétractée à l'état non alimenté en courant, de l'électroaimant (5) tire l'organe de blocage (4) contre le levier de sélection (2) et bloque par conséquent ce dernier.

6. Dispositif de commutation pour boîte de vitesses automatiques pour véhicules automobiles selon la revendication 4, **caractérisé en ce que**
l'armature, qui est déployée à l'état non alimenté en courant, de l'électroaimant (5) pousse l'organe de blocage (4) contre le levier de sélection (2) et bloque par conséquent ce dernier.

7. Dispositif de commutation pour boîte de vitesses automatiques pour véhicules automobiles selon l'une des revendications 1 à 6, **caractérisé en ce que**
- le frein (7) du véhicule automobile comporte deux générateurs de signaux, qui transmettent les signaux suivants à l'unité de commande centrale (11):
1. frein actionné (7.1),
2. frein non actionné (7.2),
- la serrure de contact (8) du véhicule automobile comporte deux récepteurs de signaux, qui détectent les signaux suivants de l'unité de commande centrale (11):
1. blocage de la serrure de contact (8.1),
2. libération de la serrure de contact (8.2),
- la serrure de contact (8) du véhicule automobile comprend deux générateurs de signaux, qui transmettent les signaux suivants à l'unité de commande centrale (11):
1. la serrure de contact est bloquée (8.3),
2. la serrure de contact est libérée (8.4)
et tous les signaux sont évalués conjointement avec le au moins un signal d'état de marche (9.1, 9.2) de la boîte de vitesses (10) du véhicule automobile dans l'unité de commande centrale (11), qui commande le dispositif d'actionnement (5) en tenant compte des paramètres prédéfinis.

8. Dispositif de commutation pour boîte de vitesses automatiques pour véhicules automobiles selon l'une des revendications précédentes, **caractérisé en ce que** les signaux sont des signaux numériques ou analogiques.

9. Dispositif de commutation pour boîte de vitesses automatiques pour véhicules automobiles selon l'une des revendications précédentes, **caractérisé en ce que** l'organe de blocage (4) possède une forme spatiale négative de l'extrémité inférieure du levier de sélection.
